# EUROPEAN PATENT SPECIFICATION

(11) **EP 1 899 385 B1**
(45) Date of publication and mention of the grant of the patent: **27.07.2011**
(21) Application number: 06759854.0
(22) Date of filing: 15.05.2006
(51) Int. Cl.: C08F 2/34

(54) **POLYMERIZATION PROCESS USING SPRAY-DRIED CATALYST**
POLYMERISATIONSVERFAHREN MIT SPRÜHGETROCKNETEM KATALYSATOR
PROCÉDÉ DE POLYMÉRISATION UTILISANT UN CATALYSEUR SÉCHÉ PAR PULVÉRISATION

(30) Priority: 28.06.2005 US 168112
(43) Date of publication of application: 19.03.2008
(73) Proprietor: Univation Technologies, LLC, Houston, TX 77056 (US)
(72) Inventor: CAO, Phuong, Anh, Old Bridge, NJ 08857 (US); KAO, Sun-chueh, Hillsborough, NJ 08844 (US)
(74) Representative: Hayes, Adrian Chetwynd
(86) International application number: PCT/US2006/018748
(87) International publication number: WO 2007/001665

(56) References cited:
- EP-A- 0 668 295
- WO-A-02/46250
- US-B1- 6 281 306

## Description

The present invention relates to processes for producing polyolefins, and more particularly, to a polymerization process for producing polyolefins that employs a spray-dried catalyst composition.

### BACKGROUND

Advances in metallocene-based olefin polymerization have resulted in the ability to produce many new polymers having improved properties useful in a wide variety of applications. However, as with any new technology, particularly in the polyolefins industry, a small cost savings may determine the feasibility of a commercial endeavor. The industry has been extremely focused on developing new and improved catalyst systems. Some have focused on designing the catalyst systems to produce new polymers, others on improved operability, and many more on improving catalyst activity. The productivity of a catalyst, *e.g.*, the amount of polymer produced per gram of the catalyst, usually is the key economic factor that can make or break a new commercial development in the polyolefin industry.

One attempt at providing high-productivity catalysts for polyolefin production has involved the use of spray-dried catalyst compositions. An example of a conventional polymerization process that uses spray-dried catalyst compositions is described in U.S. Patent No. 5,674,795. Notably, the polymerization process described therein involves the use of an external co-catalyst, which is placed in contact with a spray-dried catalyst composition before the spray-dried catalyst composition is fed to a polymerization reactor. However, the use of an external co-catalyst in polyolefin manufacturing may be problematic, for a number of reasons. For example, the external co-catalyst often may be stored separately from the catalyst composition, which may require that an additional storage tank, pump, piping, and instrumentation be provided. This may increase the complexity and cost of the polyolefin production process. As another example, many external co-catalysts are relatively expensive, and their use thus may increase the cost of the polyolefin production process.

Thus, a polyolefin production process that used a spray-dried catalyst composition, but that did not require the use of an external co-catalyst, would be desirable.

### SUMMARY

It has now been found that spray dried metallocene-containing catalyst compositions that contain an inert support may be used in polymerization processes without the need for an external co-catalyst, and may demonstrate desirable productivity as well as good particle integrity and morphology. These catalyst compositions produce polymer particles having desirable sphericity and narrow particle size distributions.

The invention provides a gas phase process for making polyolefins, comprising: (a) forming a suspension comprising (i) a metallocene catalyst, (ii) an activator; and (iii) a support material, in a diluent; (b) spray-drying the suspension to obtain a catalyst composition; and (c) contacting the catalyst composition with ethylene and at least one comonomer selected from the group consisting of C4 to C8 alpha olefins in the fluidized bed of a gas-phase reactor for a time sufficient to form a polyolefin composition, wherein an external co-catalyst is absent or substantially absent from the gas-phase reactor; wherein the metallocene catalyst is represented by the following formula:

Cp₂HfX₂

where Cp is a cyclopentadienyl, characterized in that at least one Cp is substituted with a group selected from the group of halogens, C₁ to C₁₀ alkyls, C₁ to C₂₀ alkoxys, C₅ to C₂₀ arylalkyls, C₅ to C₂₀ alkylaryls, and combinations thereof; and
X is an anionic leaving group selected from the group consisting of halides and C₁ to C₁₀ alkyls.

### DESCRIPTION OF THE DRAWING

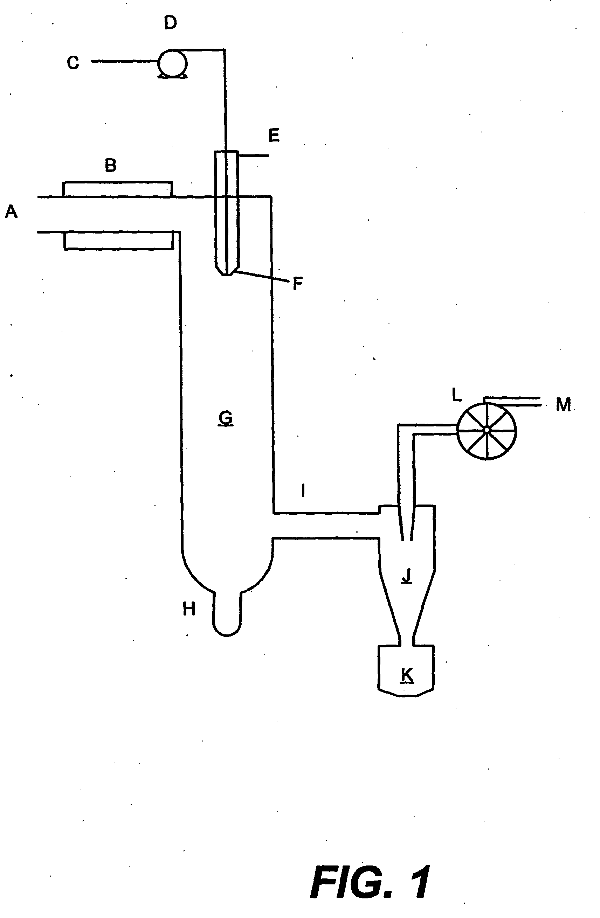

FIG. 1 is a schematic of a spray drying apparatus for making the spray dried, filled catalyst composition.

### DETAILED DESCRIPTION

The present invention provides a gas phase process for making polyolefins. A suspension is formed that comprises (i) a metallocene catalyst, (ii) an activator; and (iii) a support material, in a diluent. In certain embodiments of the present invention, the suspension may comprise, in addition to the metallocene catalyst, one or more second catalysts. Such optional second catalysts may be, for example and without limitation, metallocene catalysts, or nonmetallocene single-site catalysts. In certain embodiments of the present invention, the optional second catalysts may comprise Ziegler-Natta catalysts containing a metal from Groups IV(B), V(B), or VI(B) of the Periodic Table. Suitable activators for Ziegler-Natta catalysts are well known in the art and also may be included in the catalyst composition.

As used herein, the phrase "catalyst compound" includes any compound that, once appropriately activated, is capable of catalyzing the polymerization or oligomerization of olefins, the catalyst compound comprising at least one Group 3 to Group 12 atom, and optionally at least one leaving group bound thereto.

As used herein, the phrase "leaving group" refers to one or more chemical moieties bound to the metal center of the catalyst component that can be abstracted from the catalyst component by an activator, thus producing the species active towards olefin polymerization or oligomerization. The activator is described further below.

As used herein, the term "substituted" means that the group following that term possesses at least one moiety in place of one or more hydrogens in any position, the moieties selected from such groups as halogen radicals (*esp*., Cl, F, Br), hydroxyl groups, carbonyl groups, carboxyl groups, amine groups, phosphine groups, alkoxy groups, phenyl groups, naphthyl groups, C₁ to C₁₀ alkyl groups, C₂ to C₁₀ alkenyl groups, and combinations thereof. Examples of substituted alkyls and aryls includes, but are not limited to, acyl radicals, alkylamino radicals, alkoxy radicals, aryloxy radicals, alkylthio radicals, dialkylamino radicals, alkoxycarbonyl radicals, aryloxycarbonyl radicals, carbomoyl radicals, alkyl- and dialkyl- carbamoyl radicals, acyloxy radicals, acylamino radicals, arylamino radicals, and combinations thereof.

As used herein, structural formulas are employed as is commonly understood in the chemical arts; lines ("-") used to represent associations between a metal atom ("M", Group 3 to Group 12 atoms) and a ligand or ligand atom (*e.g.*, cyclopentadienyl, nitrogen, oxygen, halogen ions, alkyl, etc.), as well as the phrases "associated with", "bonded to" and "bonding", are not limited to representing a certain type of chemical bond, as these lines and phrases are meant to represent a "chemical bond"; a "chemical bond" defined as an attractive force between atoms that is strong enough to permit the combined aggregate to function as a unit, or "compound".

A certain stereochemistry for a given structure or part of a structure should not be implied unless so stated for a given structure or apparent by use of commonly used bonding symbols such as by dashed lines and/or heavy lines.

Unless stated otherwise, no embodiment of the present invention is herein limited to the oxidation state of the metal atom "M" as defined below in the individual descriptions and examples that follow. The ligation of the metal atom "M" is such that the compounds described herein are neutral, unless otherwise indicated.

As referred to herein, the term "external co-catalyst" will be understood to mean a compound that is contacted with a catalyst compound, so as to activate the catalyst compound, before the catalyst compound is contacted with co-monomers in a reactor. Examples of external co-catalysts may include TIBA and MMAO, among others.

### Metallocene Catalyst Compounds

The catalyst system useful in the present invention includes at least one metallocene catalyst component as described herein. Metallocene catalyst compounds are generally described throughout in, for example, 1 & 2 METALLOCENE-BASED POLYOLEFINS (John Scheirs & W. Kaminsky eds., John Wiley & Sons, Ltd. 2000); G.G. Hlatky in 181 COORDINATION CHEM. REV. 243-296 (1999) and in particular, for use in the synthesis of polyethylene in 1 METALLOCENE-BASED POLYOLEFINS 261-377 (2000). The metallocene catalyst compounds as described herein include "full sandwich" compounds having two Cp ligands (cyclopentadienyl and ligands isolobal to cyclopentadienyl) bound to a hafnium atom, and two leaving groups bound to the hafnium atom. Hereinafter, these compounds will be referred to as "metallocene catalyst components". The metallocene catalyst component is supported on a support material, in a particular exemplary embodiment as described further below, and may be supported with, or without, another component.

The metallocene catalyst is represented by the following formula:

Cp₂HfX₂

wherein Cp is a cyclopentadienyl, characterized in that at least one Cp is substituted with a group selected from the group consisting of halogens, C₁ to C₁₀ alkyls, C₁ to C₂₀ alkoxys, C₅ to C₂₀ arylalkyls, C₅ to C₂₀ alkylaryls, and combinations thereof; and
X is an anionic leaving group selected from the group consisting of halides and C₁ to C₁₀ alkyls.

Non limiting examples of metallocene catalyst components consistent with the description herein include:
bis(n-propylcyclopentadienyl)hafnium Xₙ,
bis(n-butylcyclopentadienyl)hafnium Xₙ,
bis(n-pentylcyclopentadienyl)hafnium Xₙ,
(n-propyl cyclopentadienyl)(n-butyl cyclopentadienyl) hafnium Xₙ,
bis(1-n-propyl-2-methylcyclopentadienyl)hafnium Xₙ, (n-propylcyclopentadienyl)(1-n-propyl-3-n-butylcyclopentadienyl)hafnium Xₙ,
wherein the value of n is 2.

It is contemplated that the metallocene catalysts components described above include their structural or optical or enantiomeric isomers (racemic mixture), and, in one exemplary embodiment, may be a pure enantiomer.

### Activator

As used herein, the term "activator" is defined to be any compound or combination of compounds, supported or unsupported, which can activate a catalyst compound (*e.g.*, Ziegler-Natta, metallocenes, Group 15-containing catalysts, etc.), such as by creating a cationic species from the catalyst component. The catalyst components of the present invention are thus activated towards olefin polymerization using such activators. Embodiments of such activators include Lewis acids such as cyclic or oligomeric poly(hydrocarbylaluminum oxides), alkylaluminum compounds and so called non-coordinating ionic activators ("NCA") (alternately, "ionizing activators" or "stoichiometric activators"), or any other compound that can convert a neutral metallocene catalyst component to a metallocene cation that is active with respect to olefin polymerization.

More particularly, it is within the scope of this invention to use Lewis acids such as alumoxane (*e.g.*, methylaluminoxane, or "MAO"), modified alumoxane (*e.g.*, "TIBAO"), and alkylaluminum compounds as activators, and/or ionizing activators (neutral or ionic) such as tri (n-butyl)ammonium tetrakis(pentafluorophenyl)boron and/or a trisperfluorophenyl boron metalloid precursors to activate desirable metallocenes described herein. MAO and other aluminum-based activators are well known in the art. Ionizing activators are well known in the art. The activators may be associated with or bound to a support, either in association with the catalyst component (*e.g.*, metallocene) or separate from the catalyst component, such as described by Gregory G. Hlatky, Heterogeneous Single-Site Catalysts for Olefin Polymerization 100(4) CHEMICAL REVIEWS 1347-1374 (2000).

Non-limiting examples of aluminum alkyl compounds that may be utilized as activators in the methods of the present invention include trimethylaluminum, triethylaluminum, triisobutylaluminum, tri-n-hexylaluminum, tri-n-octylaluminum and the like.

Examples of neutral ionizing activators include Group 13 tri-substituted compounds, in particular, tri-substituted boron, tellurium, aluminum, gallium and indium compounds, and mixtures thereof. The three substituent groups are each independently selected from the group consisting of alkyls, alkenyls, halogen, substituted alkyls, aryls, arylhalides, alkoxy and halides. In one embodiment, the three groups are independently selected from the group consisting of halogen, mono or multicyclic (including halosubstituted) aryls, alkyls, and alkenyl compounds and mixtures thereof. In another embodiment, the three groups are selected from the group consisting of alkenyl groups having 1 to 20 carbon atoms, alkyl groups having 1 to 20 carbon atoms, alkoxy groups having 1 to 20 carbon atoms and aryl groups having 3 to 20 carbon atoms (including substituted aryls), and combinations thereof. In yet another embodiment, the three groups are selected from the group consisting of alkyls having 1 to 4 carbon groups, phenyl, naphthyl and mixtures thereof. In yet another embodiment, the three groups are selected from the group consisting of highly halogenated alkyls having 1 to 4 carbon groups, highly halogenated phenyls, and highly halogenated naphthyls and mixtures thereof. By "highly halogenated", it is meant that at least 50% of the hydrogens are replaced by a halogen group selected from the group consisting of fluorine, chlorine and bromine. In another embodiment, the neutral tri-substituted Group 13 compounds are boron compounds.

Illustrative, non-limiting examples of ionic ionizing activators include trialkyl-substituted ammonium salts such as triethylammonium tetra(phenyl)boron, tripropylammonium tetra(phenyl)boron, tri(n-butyl)ammonium tetra(phenyl)boron, trimethylammonium tetra(p-tolyl)boron, trimethylammonium tetra(o-tolyl)boron, tributylammonium tetra(pentafluorophenyl)boron, tripropylammonium tetra(o,p-dimethylphenyl)boron, tributylammonium tetra(m,m-dimethylphenyl)boron, tributylammonium tetra(p-tri-fluoromethylphenyl)boron, tributylammonium tetra(pentafluorophenyl)boron, tri(n-butyl)ammonium tetra(o-tolyl)boron and the like; N,N-dialkyl anilinium salts such as N,N-dimethylanilinium tetra(phenyl)boron, N,N-diethylanilinium tetra(phenyl)boron, N,N-2,4,6-pentamethylanilinium tetra(phenyl)boron and the like; dialkyl ammonium salts such as di-(isopropyl)ammonium tetra(pentafluorophenyl)boron, dicyclohexylammonium tetra(phenyl)boron and the like; and triaryl phosphonium salts such as triphenylphosphonium tetra(phenyl)boron, tri(methylphenyl)phosphonium tetra(phenyl)boron, tri(dimethylphenyl)phosphonium tetra(phenyl)boron and the like, and their aluminum equivalents.

Other activators include those described in WO 98/07515 such as tris (2, 2', 2"- nonafluorobiphenyl) fluoroaluminate. Combinations of activators also are contemplated by the invention, for example, alumoxanes and ionizing activators in combinations. Other activators include aluminum/boron complexes, perchlorates, periodates and iodates including their hydrates; lithium (2,2'-bisphenyl-ditrimethylsilicate)-4THF; silylium salts in combination with a non-coordinating compatible anion. Also, methods of activation such as using radiation, electro-chemical oxidation, and the like also are contemplated as activating methods for the purposes of rendering the neutral metallocene-type catalyst compound or precursor to a metallocene-type cation capable of polymerizing olefins.

In general, the activator and catalyst component(s) are combined in mole ratios of activator to catalyst component from 1000:1 to 0.1:1 in one embodiment, and from 300:1 to 1:1 in a more particular embodiment, and from 150:1 to 1:1 in yet a more particular embodiment, and from 50:1 to 1:1 in yet a more particular embodiment, and from 10:1 to 0.5:1 in yet a more particular embodiment, and from 3:1 to 0.3:1 in yet a more particular embodiment, wherein a desirable range may include any combination of any upper mole ratio limit with any lower mole ratio limit described herein. When the activator is a cyclic or oligomeric poly(hydrocarbylaluminum oxide) (*e.g.*, "MAO"), the mole ratio of activator to catalyst component ranges from 2:1 to 100,000:1 in one embodiment, and from 10:1 to 10,000:1 in another embodiment, and from 50:1 to 2,000:1 in a more particular embodiment. When the activator is a neutral or ionic ionizing activator such as a boron alkyl and the ionic salt of a boron alkyl, the mole ratio of activator to catalyst component ranges from 0.5:1 to 10:1 in one embodiment, and from 1:1 to 5:1 in yet a more particular embodiment.

More particularly, the molar ratio of Al/metallocene-metal (Al from MAO) ranges from 80 to 180 in one embodiments, and from 120 to 180 in another embodiment.

### Support material

The terms "support" or "carrier", as used herein, are used interchangeably and refer to any support material, including inorganic or organic support materials. In one exemplary embodiment, the support material may be a porous support material. Non-limiting examples of support materials include inorganic oxides and inorganic chlorides, and in particular such materials as talc, clay, silica, alumina, magnesia, zirconia, iron oxides, boria, calcium oxide, zinc oxide, barium oxide, thoria, aluminum phosphate gel, and polymers such as polyvinylchloride and substituted polystyrene, functionalized or crosslinked organic supports such as polystyrene divinyl benzene polyolefins or polymeric compounds, and mixtures thereof, and graphite, in any of its various forms. In certain preferred embodiments of the present invention, the support material is fumed silica commercially available from Cabot Corporation under the trade name "Cab-O-Sil" TS-610.

The support may be contacted with the other components of the catalyst system in any number of ways. In one exemplary embodiment, the support is contacted with the activator to form an association between the activator and support, or a "bound activator". In another exemplary embodiment, the catalyst component may be contacted with the support to form a "bound catalyst component". In yet another exemplary embodiment, the support may be contacted with the activator and catalyst component together, or with each partially in any order The components may be contacted by any suitable means as in a solution, slurry, or solid form, or some combination thereof. In certain exemplary embodiments, the components may also be heated to a temperature in the range of from 25° C to 250° C while being contacted.

Desirable carriers are inorganic oxides that include Group 2, 3, 4, 5, 13 and 14 oxides and chlorides. Support materials include silica, alumina, silica-alumina, magnesium chloride, graphite, and mixtures thereof in one exemplary embodiment. Other useful supports include magnesia, titania, zirconia, montmorillonite (as described in EP 0 511665 B1), phyllosilicate, and the like. In certain exemplary embodiments, combinations of the support materials may be used, including, but not limited to, combinations such as silica-chromium, silica-alumina, silica-titania, and the like. Additional support materials may include those porous acrylic polymers described in EP 0 767 184 B1.

In certain embodiments, the support material has an average particle size of less than about 10 micrometer, preferably less than about 1 micrometer, and most preferably has an average particle size in the range of from about 0.001 to about 0.1 micrometers.

### Preparation of Catalyst Compositions

In one embodiment, the catalyst compositions used in the present invention are prepared by forming a well-stirred suspension of support material, one or more metallocene catalysts and one or more activators in one or more suitable diluents, and then spray drying the suspension. Typically, in preparing the suspension, the support material is added to a solution or dispersion of the activator to form a first suspension. The first suspension is stirred for approximately 20 to 60 minutes, and then a solution or dispersion of the metallocene catalyst is added thereto. The resulting final suspension is stirred for a further 20 to 60 minutes and then spray dried. The same or different diluents may be used for the metallocene catalyst and the activator.

The diluent employed in forming the suspension is typically a material capable of dissolving or suspending the metallocene catalyst and the activator, and suspending the support material. For example, hydrocarbons such as linear or branched alkanes including n-hexane, n-pentane and isopentane; aromatics such as toluene and xylene; and halogenated hydrocarbons such as dichloromethane are useful as the diluent. In certain preferred embodiments, the diluent may have a boiling point from 0 degrees to 150 degrees Celsius.

Preferably, spray drying is performed by spraying the suspension through a heated nozzle into a stream of heated inert drying gas, such as nitrogen, argon, or propane to evaporate the diluent and produce solid-form particles of metallocene catalyst and activator in a matrix of support material. The volumetric flow of the drying gas is preferably considerably larger than the volumetric flow of the suspension. Atomization of the suspension may be accomplished using an atomizing nozzle or a centrifugal high speed disc atomizer.

For example, in certain embodiments of the present invention, spray drying may be performed in accordance with the exemplary system that is illustrated in Figure 1. Referring now to Figure 1, in certain embodiments, the final suspension may be flowed through a reservoir attached at point C (*e.g.*, by a peristaltic pump D). As the suspension passes through atomizing nozzle F, it may be mixed with atomizing gas (which atomizing gas may enter the system at point E, for example). The temperature of atomizing nozzle F may be at, or above, the boiling point of the highest boiling component of the final suspension. The mist of catalyst composition thus formed in drying chamber G then may dry in the presence of heated inert drying gas, which may enter the drying chamber G at point A, and which may be heated by heater B before entering. Any spray-dried catalyst particles having an undesirably large diameter may fail to be entrained in the flow of heated inert drying gas, and may be dropped into an oversize collection pot H. The remainder of the spray-dried catalyst particles may continue through drying chamber outlet I into cyclone separator J, wherein the spray-dried catalyst particles may disengage from the gas stream, and may drop into removable product collection pot K, from which the spray-dried catalyst particles may be recovered. The drying gas may be drawn through an aspirator L, and may be removed from the system at point M. Another example of a suitable process for spray-drying particles is described, for example, in U.S. Patent No. 5,290,745.

The amounts of metallocene catalyst and activator employed in the suspension of metallocene catalyst, activator and support material are as follows. When the activator is a branched or cyclic oligomeric poly(hydrocarbylaluminum oxide), the mole ratio of aluminum atoms (from the activator) to transition metal (from the metallocene catalyst) in the suspension is between 10 and 5000, preferably 50 to 1000, and most preferably 100 to 500.

The amount of support employed in forming the suspension is from 1 to 80 percent by weight, preferably 10 to 60 percent by weight, and most preferably 20 to 50 percent by weight, based on the total weight of the catalyst composition.

The spray dried, filled catalyst composition may optionally contain an organic or inorganic compound as a binder so that particle integrity is further enhanced. The binder may also serve a second function, such as stabilizing the final polyolefin product against oxidation, or improving the gas phase fluidization of nascent polymer particles. Such compounds are well known in the art.

The spray dried, filled catalyst composition is a particulate material containing at least one activator and at least one metallocene catalyst in a matrix of at least one inert support material. The particles of catalyst composition have an average particle size of 5 to 500, preferably 10 to 80, micrometers. The catalyst composition may be mixed with a suitable protective material such as mineral oil for storage.

The catalyst composition may be used in the polymerization of ethylene and optionally higher alpha-olefin monomers, i.e., having 3 to 8 carbon atoms, into ethylene homopolymers and copolymers.

In an exemplary embodiment, the supported catalyst(s) are treated by combining them with the activators, and further combining them with up to 4.0 wt% (by weight of the catalyst composition) of an antistatic agent, such as an ethoxylated or methoxylated amine, an example of which is Atmer AS-990 (available from Ciba of Tarrytown, New York). In another exemplary embodiment, the supported catalyst(s) are treated by combining them with the activators, and further combining them with up to 4.0 wt% (by weight of the catalyst composition) of a carboxylate metal salt, such as an aluminum mono, di-or tri-stearate. In yet another exemplary embodiment, the supported catalyst(s) are treated by combining them with the activators, and further combining them with up to 4.0 wt% (by weight of the catalyst composition) of a combination of an antistatic agent and a carboxylate metal salt (*e.g.*, 2 wt% of the antistatic agent and 2 wt% of the carboxylate metal salt in some embodiments, or 3 wt% of the antistatic agent and 1 wt% of the carboxylate metal salt in some embodiments, or 1 wt% of the antistatic agent and 3 wt% of the carboxylate metal salt in some embodiments, or the like). In certain other exemplary embodiments of the present invention, the concentrations of MAO and metallocene in the catalyst composition are optimized such that the antistatic agent and/or carboxylate metal salt are present in an amount less than 4.0 wt %, such as, for example, 2 wt% (*e.g.*, a combination of 1 wt% of the antistatic agent and 1 wt% of the carboxylate metal salt in some embodiments, or 2 wt% of the antistatic agent and 0 wt% of the carboxylate metal salt in some embodiments, or 0 wt% of the antistatic agent and 2 wt% of the carboxylate metal salt in some embodiments, or the like). In still other exemplary embodiments of the present invention, the concentrations of MAO and metallocene in the catalyst composition are optimized such that the antistatic agent is absent or substantially absent from the catalyst composition.

### Gas Phase Polymerization Process

The polymerization process may be conducted in the gas phase in a stirred or fluidized bed reactor, or in a slurry phase reactor using equipment and procedures well known in the art. Ethylene monomer and optionally one or more higher alpha-olefin monomers (*e.g.*, a co-monomer selected from the group consisting of C4 to C8 alpha olefins) are contacted with an effective amount of catalyst composition at a temperature and a pressure sufficient to initiate polymerization, for a time sufficient to form a polyolefin composition. The process may be carried out in a single reactor or in two or more reactors in series. The process is conducted substantially in the absence of catalyst poisons such as moisture, oxygen, carbon dioxide, and acetylene, since only minor amounts (e.g., less than or equal to 2 ppm) of such materials have been found to affect the polymerization adversely.

The one or more reactor pressures in a gas phase process (either single stage or two or more stages) may vary from 100 psig (690 kPa) to 500 psig (3448 kPa), and in the range of from 200 psig (1379 kPa) to 400 psig (2759 kPa) in another embodiment, and in the range of from 250 psig (1724 kPa) to 350 psig (2414 kPa) in yet another embodiment.

Conventional additives may be included in the process. When hydrogen is used as a chain transfer agent in the process, it is used in amounts varying between 0.001 to 10 moles of hydrogen per mole of ethylene plus comonomer. Also, as desired for temperature control of the system, any materials inert to the catalyst composition and reactants can also be present in the system.

Generally, an external co-catalyst is not used in the methods of the present invention, and accordingly, an external co-catalyst generally is absent or substantially absent from the gas-phase reactor during the gas-phase polymerization process. Generally, the slurry or gas phase process is operated in the presence of a spray-dried bulky ligand metallocene-type catalyst system of the invention and in the absence of, or essentially free of, any external co-catalysts, such as triethylaluminum, trimethylaluminum, tri-isobutylaluminum and tri-n-hexylaluminum and diethyl aluminum chloride, dibutyl zinc and the like. By "essentially free", it is meant that these compounds are not deliberately added to the reactor or any reactor components, and if present, are present to less than 1 ppm in the reactor.

The spray dried, filled catalyst composition has good activity in both fluidized bed reactors and slurry reactors. In particular, the activity of the spray dried, filled catalyst composition is comparable to that of both supported and unsupported (e.g., in solution) metallocene catalysts.

### Polymer Product

The polyolefins made according to the methods of the present invention may be blended with additives to form compositions that can then be used in articles of manufacture. Those additives include antioxidants, nucleating agents, acid scavengers, plasticizers, stabilizers, anticorrosion agents, blowing agents, other ultraviolet light absorbers such as chain-breaking antioxidants, etc., quenchers, antistatic agents, slip agents, pigments, dyes and fillers and cure agents such as peroxide. These and other common additives in the polyolefin industry may be present in polyolefin compositions from 0.01 to 50 wt% in one exemplary embodiment, and from 0.1 to 20 wt% in another exemplary embodiment, and from 1 to 5 wt% in yet another exemplary embodiment, wherein a desirable range may include any combination of any upper wt% limit with any lower wt% limit.

In particular, antioxidants and stabilizers such as organic phosphites, hindered amines, and phenolic antioxidants may be present in the polyolefin compositions of the invention from 0.001 to 5 wt% in one exemplary embodiment, from 0.01 to 0.8 wt% in another exemplary embodiment, and from 0.02 to 0.5 wt% in yet another exemplary embodiment. Non-limiting examples of organic phosphites that are suitable are tris(2,4-di-tert-butylphenyl)phosphite (IRGAFOS 168) and di(2,4-di-tert-butylphenyl)pentaerithritol diphosphite (ULTRANOX 626). Non-limiting examples of hindered amines include poly[2-N,N'-di(2,2,6,6-tetramethyl-4-piperidinyl)-hexanediamine-4-(1-amino-1,1,3,3-tetramethylbutane)symtriazine] (CHIMASORB 944); bis(1,2,2,6,6-pentamethyl-4-piperidyl)sebacate (TINUVIN 770). Non-limiting examples of phenolic antioxidants include pentaerythrityl tetrakis(3,5-di-tert-butly-4-hydroxyphenyl) propionate (IRGANOX 1010); and 1,3,5-Tri(3,5-di-tert-butyl-4-hydroxybenzyl-isocyanurate (IRGANOX 3114).

Fillers may be present from 0.1 to 50 wt% in one exemplary embodiment, and from 0.1 to 25 wt% of the composition in another exemplary embodiment, and from 0.2 to 10 wt% in yet another exemplary embodiment. Desirable fillers include, but are not limited to, titanium dioxide, silicon carbide, silica (and other oxides of silica, precipitated or not), antimony oxide, lead carbonate, zinc white, lithopone, zircon, corundum, spinel, apatite, Barytes powder, barium sulfate, magnesiter, carbon black, dolomite, calcium carbonate, talc and hydrotalcite compounds of the ions Mg, Ca, or Zn with Al, Cr or Fe and CO₃ and/or HPO₄, hydrated or not; quartz powder, hydrochloric magnesium carbonate, glass fibers, clays, alumina, and other metal oxides and carbonates, metal hydroxides, chrome, phosphorous and brominated flame retardants, antimony trioxide, silica, silicone, and blends thereof. These fillers may particularly include any other fillers and porous fillers and supports known in the art.

Fatty acid salts may also be present in the polyolefin compositions. Such salts may be present from 0.001 to 2 wt% of the composition in one exemplary embodiment, and from 0.01 to 1 wt% in another exemplary embodiment. Examples of fatty acid metal salts include lauric acid, stearic acid, succinic acid, stearyl lactic acid, lactic acid, phthalic acid, benzoic acid, hydroxystearic acid, ricinoleic acid, naphthenic acid, oleic acid, palmitic acid, and erucic acid, suitable metals including Li, Na, Mg, Ca, Sr, Ba, Zn, Cd, Al, Sn, Pb and so forth. Desirable fatty acid salts are selected from magnesium stearate, calcium stearate, sodium stearate, zinc stearate, calcium oleate, zinc oleate, and magnesium oleate.

With respect to the physical process of producing the blend of polyolefin and one or more additives, sufficient mixing should take place to assure that a uniform blend will be produced prior to conversion into a finished product. The polyolefin suitable for use in the present invention can be in any physical form when used to blend with the one or more additives. In one exemplary embodiment, reactor granules (defined as the granules of polymer that are isolated from the polymerization reactor) are used to blend with the additives. The reactor granules have an average diameter of from 10 µm to 5 mm, and from 50 µm to 10 mm in another exemplary embodiment. Alternately, the polyolefin is in the form of pellets, such as, for example, pellets having an average diameter of from 1 mm to 6 mm that are formed from melt extrusion of the reactor granules.

One method of blending the additives with the polyolefin is to contact the components in a tumbler or other physical blending means, the polyolefin being in the form of reactor granules. This can then be followed, if desired, by melt blending in an extruder. Another method of blending the components is to melt blend the polyolefin pellets with the additives directly in an extruder, Brabender or any other melt blending means.

The resultant polyolefin and polyolefin compositions may be further processed by any suitable means such as by calendering, casting, coating, compounding, extrusion, foaming; all forms of molding including compression molding, injection molding, blow molding, rotational molding, and transfer molding; film blowing or casting and all methods of film formation to achieve, for example, uniaxial or biaxial orientation; thermoforming, as well as by lamination, pultrusion, protrusion, draw reduction, spinbonding, melt spinning, melt blowing, and other forms of fiber and nonwoven fabric formation, and combinations thereof. These and other forms of suitable processing techniques are described in, for example, PLASTICS PROCESSING (Radian Corporation, Noyes Data Corp. 1986).

In the case of injection molding of various articles, simple solid state blends of the pellets serve equally as well as pelletized melt state blends of raw polymer granules, of granules with pellets, or of pellets of the two components, since the forming process includes a remelting and mixing of the raw material. In the process of compression molding of medical devices, however, little mixing of the melt components occurs, and a pelletized melt blend would be preferred over simple solid state blends of the constituent pellets and/or granules. Those skilled in the art will be able to determine the appropriate procedure for blending of the polymers to balance the need for intimate mixing of the component ingredients with the desire for process economy.

The polymers, in one exemplary embodiment, have a melt index (MI) or (I₂) as measured by ASTM-D-1238-E (190/2.16) in the range from 0.01 dg/min to 1000 dg/min, more preferably from 0.01 dg/min to 100 dg/min, even more preferably from 0.1 dg/min to 50 dg/min, and most preferably from 0.1 dg/min to 10 dg/min, and even more preferably from 0.1 dg/min to 5 dg/min.

The polymers, in one exemplary embodiment, have a melt flow ratio (I₂₁/I₂) (I₂₁ is measured by ASTM-D-1238-F, [190/21.6]) of from 10 to 300, more preferably from 10 to less than 250, and from 15 to 200 in yet another exemplary embodiment, and from 20 to 180 in yet another exemplary embodiment, and from 15 to 30 in yet another exemplary embodiment, and from 10 to 40 in yet another exemplary embodiment, and from 10 to 50 in yet another exemplary embodiment, wherein a desirable range may include any combination of any upper limit with any lower limit.

Common rheological properties, processing methods and end use applications of metallocene based polyolefins are discussed in, for example, 2 METALLOCENE-BASED POLYOLEFINS 400-554 (John Scheirs & W. Kaminsky, eds. John Wiley & Sons, Ltd. 2000). The polyolefinic compositions are suitable for such articles as films, fibers and nonwoven fabrics, extruded articles and molded. Examples of films include blown or cast films formed by coextrusion or by lamination useful as shrink film, cling film, stretch film, sealing films, oriented films, snack packaging, heavy duty bags, grocery sacks, baked and frozen food packaging, medical packaging, industrial liners, membranes, etc. in food-contact and non-food contact applications, agricultural films and sheets. Examples of fibers include melt spinning, solution spinning and melt blown fiber operations for use in woven or non-woven form to make filters, diaper fabrics, hygiene products, medical garments, geotextiles, etc. Examples of extruded articles include tubing, medical tubing, wire and cable coatings, pipe, geomembranes, and pond liners. Examples of molded articles include single and multi-layered constructions in the form of bottles, tanks, large hollow articles, rigid food containers and toys, .

Other desirable articles that can be made from and/or incorporate the polyolefins of the present invention include automotive components, sporting equipment, outdoor furniture (*e.g.*, garden furniture) and playground equipment, boat and water craft components, and other such articles. More particularly, automotive components include such as bumpers, grills, trim parts, dashboards and instrument panels, exterior door and hood components, spoiler, wind screen, hub caps, mirror housing, body panel, protective side molding, and other interior and external components associated with automobiles, trucks, boats, and other vehicles.

Further useful articles and goods may be formed economically or incorporate the polyolefins produced by the practice of our invention, including: crates, containers, packaging material, labware, office floor mats, instrumentation sample holders and sample windows; liquid storage containers for medical uses such as bags, pouches, and bottles for storage and IV infusion of blood or solutions; wrapping or containing food preserved by irradiation, other medical devices including infusion kits, catheters, and respiratory therapy, as well as packaging materials for medical devices and food which may be irradiated by gamma or ultraviolet radiation including trays, as well as stored liquid, particularly water, milk, or juice, containers including unit servings and bulk storage containers.

### EXAMPLES

In order to provide a better understanding of the present invention, including representative advantages thereof, the following examples of some exemplary embodiments are offered. In no way should such examples be read to limit, or to define, the scope of the invention.

**Activity** for laboratory gas-phase reactions was measured in grams polyethylene/[(mmol metal)(hours)(100 psi ethylene)].

**PDI** is the Polydispersity Index, which is equivalent to Molecular Weight Distribution (Mw/Mn, where **Mw** is weight-average molecular weight, and **Mn** is number average molecular weight). PDI is determined by gel permeation chromatography using crosslinked polystyrene columns; pore size sequence: 1 column less than 1000 Å, 3 columns of mixed 5x10⁷ Å; 1,2,4-trichlorobenzene solvent at 140°C with refractive index detection.

**Kaydol oil**, a white mineral oil, was purchased from Witco Corporation, and was purified by degassing with nitrogen for about 1 hour, followed by heating at 80°C under vacuum for 10 hours.

**(PrCp)₂HfCl₂** is bis(n-propylcyclopentadienyl)hafnium dichloride, available from Boulder Scientific Company.

**MAO** is methylalumoxane in toluene (30 weight percent), available from Albemarle Corporation.

**SMAO** is silica-supported MAO, and was prepared by the following procedure. A toluene solution of MAO was prepared by mixing 960 grams of 30 wt% MAO in 2.7 liters of dry, degassed toluene. This solution was stirred at ambient temperature, while 850 grams of silica gel (Ineos 757, dehydrated at 600°C) was added. The resulting slurry was stirred at ambient temperature for about 1 hour, and the solvent was removed under reduced pressure with a stream of nitrogen at 85°C. The drying continued until the temperature of the material remained constant for 2 hours. The resulting free-flowing white powder demonstrated an aluminum loading of about 4.67 mmol Aluminum per gram of solid.

### Preparation of Sample Catalyst Compositions Nos.1 and 2

Sample Catalyst Composition No. 1 was prepared by mixing 25 grams of bis(n-propylcyclopentadienyl)hafnium dichloride with 6.39 kilograms of a 10% solution by weight of MAO in toluene, and with 0.91 kilograms of fumed silica (Cabosil TS-610). The metallocene, MAO-in-toluene solution, and fumed silica were introduced into an atomizing device, thereby producing droplets that were contacted with a gas stream to evaporate the liquid, thereby forming a powder. The actual yield was about 1.5 kilograms. Neglecting residual toluene in the spray-dried product, the theoretical product weight was calculated to be 1.57 kilograms.

Sample Catalyst Composition No. 2, a comparative sample, was prepared according to the following procedure. A Kaydol oil solution was provided comprising 0.040 grams of (PrCp)₂HfCl₂ (0.0863 mmol) in 18.3 grams of Kaydol oil. About 2.223 grams of SMAO were added to the Kaydol oil solution. The resulting slurry then was stirred for about 16 hours at room temperature. The solid catalyst was recovered by first filtering off the oil, and then washing three times with 15 milliliters of hexane, followed by drying at room temperature for about 1 hour. The resulting off-white solid (2.250 grams, 99% yield) demonstrated a final Hf loading of 0.0381 mmol per gram of solid catalyst, and an Al/Hf ratio of about 121.

A comparison of Sample Catalyst Compositions Nos. 1 and 2 is provided in the table below.

**TABLE 1**

| **Catalyst Composition** | **Aluminum (wt%)** | **Aluminum (mmol/gram)** | **Hafnium (wt%)** | **Hafnium (mmol/gram)** | **Al/Hf ratio** |
|---|---|---|---|---|---|
| No.1 | 16.3 | 6.04 | 0.61 | 0.034 | 178 |
| No.2 | 12.4 | 4.59 | 0.68 | 0.038 | 121 |

Sample Catalyst Composition Nos. 1 and 2 were reacted in a laboratory gas phase reactor (1.65 liter, stainless steel autoclave, equipped with a variable-speed mechanical agitator, and normally operated at a 45° angle from vertical during polymerization) according to the following procedure. Typically, the reactor first was charged with about 200 grams of NaCl, and dried by heating at 95°C under a stream of dry nitrogen for 60 minutes. After cooling to 80°C, 3.0 grams SMAO were added to scavenge impurities.

Because the MAO (in the SMAO) is anchored on the silica support, the MAO generally does not react with Sample Catalyst Compositions Nos. 1 or 2 within the gas phase reactor. Rather, the SMAO interacts primarily with materials of relatively greater mobility (*e.g.*, moisture, air, and other liquid impurities). In accordance with the present invention, the SMAO was not pre-mixed with the supported Sample Catalyst Compositions Nos. 1 or 2, but rather was added in an early stage of reactor conditioning.

The reactor then was sealed, and the components were stirred gently. Pre-filled hydrogen and 1-hexene were pushed in with an ethylene flow; the H₂/C₂ ratio was 0.0012, and the C₆/C₂ ratio was 0.015. The reactor then was heated to a specified polymerization temperature, and pressured to a total pressure of 250 psi with ethylene. The ethylene partial pressure was about 1450 kPa (210 psi). Once steady state was reached, about 0.020 grams of a sample catalyst composition (as specified in Table 2 below) was pressured in with a nitrogen flow to begin polymerization. Heating was continued to maintain the specified polymerization temperature. Unless otherwise noted, polymerization was continued for 60 minutes, during which time ethylene, hydrogen, and 1-hexene continually were added to the reactor to maintain a constant total pressure of 1720 kPa (250 psi). After 60 minutes, the reactor was vented and opened. The sample was weighed, washed several times with water to remove NaCl, and dried in a vacuum oven at 80°C overnight.

The results of the reactions described above are set forth in the tables below:

**TABLE 2**

| Run | Catalyst | Temp (C) | Activity | % Improvement | MI | MFR | Mw | PDI |
|---|---|---|---|---|---|---|---|---|
| 1 | Sample Catalyst Composition No. 1 | 75 | 93,016 | 57 | 1 | 25 | 123,293 | 3.2 |
| Cl | Sample Catalyst Composition No. 2 | 75 | 59,210 | --- | 0.9 | 34 | 138,010 | 3.8 |
| 2 | Sample Catalyst Composition No. 1 | 85 | 116,590 | 68 | 1.2 | 20 | 117,247 | 2.7 |
| C2 | Sample Catalyst Composition No. 2 | 85 | 69,276 | --- | 1 | 22 | 120,610 | 3 |

## Claims

1. A gas phase process for making polyolefins, comprising:
(a) forming a suspension comprising (i) a metallocene catalyst, (ii) an activator; ;and (iii) a support material, in a diluent;
(b) spray-drying the suspension to form a catalyst composition; and
(c) contacting the catalyst composition with ethylene and at least one comonomer selected from the group consisting of C4 to C8 alpha olefins in a fluidized bed of a gas-phase reactor for a time sufficient to form a polyolefin composition, wherein an external co-catalyst is absent or substantially absent from the gas phase reactor;
wherein the metallocene catalyst is represented by the following formula:
Cp₂HfX₂
wherein Cp is a cyclopentadienyl, **characterized in that** at least one Cp is substituted with a group selected from the group consisting of halogens, C₁ to C₁₀ alkyls, C₁ to C₂₀ alkoxys, C₅ to C₂₀ arylalkyls, C₅ to C₂₀ alkylaryls, and combinations thereof; and
X is an anionic leaving group selected from the group consisting of halides and C₁ to C₁₀ alkyls.

2. The process of claim 1, wherein the activator is methylaluminoxane.

3. The process of claim 1, wherein the at least one Cp is substituted with a group selected from C₅ to C₂₀ arylalkyls, C₅ to C₂₀ alkylaryls, and combinations thereof.

4. The process of claim 3, wherein X is an anionic leaving group selected from the group consisting of C₁ to C₁₀ alkyls.

5. The process of claim 1, wherein the metallocene catalysts bis(n-propylcyclopentadienyl)hafnium.

6. The process of claim 5, wherein the spray-dried catalyst is prepared according to the method of the Example.

7. The process of claim 6, wherein the catalyst is contacted with ethylene and 1-hexene according to the protocol of the Example.

## Patentansprüche

1. Gasphasenverfahren zur Herstellung von Polyolefinen, das die folgenden Schritte umfasst:
(a) es wird eine Suspension gebildet, die (i) einen Metallocen-Katalysator, (ii) einen Aktivator und (iii) einen Trägerstoff in einem Verdünnungsmittel enthält;
(b) die Suspension wird sprühgetrocknet, um eine Katalysator-Zusammensetzung zu bilden;
(c) die Katalysator-Zusammensetzung wird mit Ethylen und zumindest einem Comonomer, das unter den C₄-C₈-alpha-Olefinen ausgewählt ist, in einem Fließbett eines Gasphasenreaktors während einer Zeitspanne in Kontakt gebracht, die ausreichend ist, um eine Polyolefin-Zusammensetzung zu bilden, wobei ein externer Cokatalysator in dem Gasphasenreaktor fehlt oder im Wesentlichen fehlt;
wobei der Metallocen-Katalysator durch die folgende Formel dargestellt werden kann:
Cp₂HfX₂
wobei Cp Cyclopentadienyl bedeutet, **dadurch gekennzeichnet, dass** zumindest ein Cp mit einer Gruppe substituiert ist, die aus der Gruppe bestehend aus Halogenen, C₁-C₁₀-Alkylgruppen, C₁-C₂₀-Alkoxygruppen, C₅-C₂₀-Arylalkylgruppen, C₅-C₂₀-Alkylarylgruppen und deren Kombinationen ausgewählt ist; und
X eine austretende anionische Gruppe ist, die unter den Halogeniden und den C₁-C₁₀-Alkylgruppen ausgewählt ist.

2. Verfahren nach Anspruch 1, wobei der Aktivator das Methylalumoxan ist.

3. Verfahren nach Anspruch 1, wobei zumindest ein Cp mit einer Gruppe substituiert ist, die unter den C₅-C₂₀-Arylalkylgruppen, C₅-C₂₀-Alkylarylgruppen und deren Kombinationen ausgewählt ist.

4. Verfahren nach Anspruch 3, wobei X eine austretende anionische Gruppe ist, die unter den C₁-C₁₀-Alkylgruppen ausgewählt ist.

5. Verfahren nach Anspruch 1, wobei der Metallocen-Katalysator das Bis(n-propylcyclopentadienyl)hafnium ist.

6. Verfahren nach Anspruch 5, wobei der sprühgetrocknete Katalysator nach dem Verfahren des Beispiels hergestellt ist.

7. Verfahren nach Anspruch 6, wobei der Katalysator gemäß der Vorgehensweise des Beispiels mit Ethylen und 1-Hexen in Kontakt gebracht wird.

## Revendications

1. Procédé en phase gazeuse pour préparer des polyoléfines, comprenant:
(a) former une suspension comprenant (i) un catalyseur de métallocène, (ii) un activateur; et (iii) un matériau de support, dans un diluant;
(b) sécher par pulvérisation la suspension pour former une composition de catalyseur; et
(c) mettre en contact la composition de catalyseur avec de l'éthylène et au moins un comonomère sélectionné dans le groupe consistant en alpha oléfines C4 à C8 dans un lit fluidisé d'un réacteur en phase gazeuse pendant une durée suffisante pour former une composition de polyoléfine, où un co-catalyseur externe est absent ou sensiblement absent du réacteur en phase gazeuse;
où le catalyseur de métallocène est représenté par la formule suivante:
Cp₂HfX₂
où Cp est un cyclopentadiényle, **caractérisé en ce qu'**au moins un Cp est substitué par un groupe sélectionné dans le groupe consistant en halogènes, alkyles C₁ à C₁₀, alcoxys C₁ à C₂₀, arylalkyles C₅ à C₂₀, alkylaryles C₅ à C₂₀ et leurs combinaisons; et
X est un groupe anionique partant sélectionné dans le groupe consistant en halogénures et alkyles C₁ à C₁₀.

2. Procédé selon la revendication 1, dans lequel l'activateur est le méthylaluminoxane.

3. Procédé selon la revendication 1, dans lequel au moins un Cp est substitué par un groupe sélectionné parmi arylalkyles C₅ à C₂₀, alkylaryles C₅ à C₂₀ et leurs combinaisons.

4. Procédé selon la revendication 3, où X est un groupe anionique partant sélectionné dans le groupe consistant en alkyles C₁ à C₁₀.

5. Procédé selon la revendication 1, où le catalyseur de métallocène est le bis(n-propylcyclopentadiényl)hafnium.

6. Procédé selon la revendication 5, où le catalyseur séché par pulvérisation est préparé selon le procédé de l'Exemple.

7. Procédé selon la revendication 6, où le catalyseur est mis en contact avec de l'éthylène et 1-hexène selon le protocole de l'Exemple.
